# EUROPÄISCHE PATENTSCHRIFT

(11) **EP 1 205 951 B1**
(45) Veröffentlichungstag und Bekanntmachung des Hinweises auf die Patenterteilung: **28.12.2005**
(21) Anmeldenummer: 01125164.2
(22) Anmeldetag: 23.10.2001
(51) Int. Cl.: H01F 41/10, B23K 1/00, H01R 4/02, B23K 1/08, B23K 1/20, B23K 3/06, B23K 3/08, H01F 27/29, B23K 1/018

(54) **Verfahren zum Kontaktieren eines Wicklungsdrahtes einer Spule mit einem Anschlussstift**
Process for contacting the winding wire of a coil with a contacting pin
Procédé pour contacter le fil d'enroulement d'une bobine avec une broche

(30) Priorität: 08.11.2000 DE 10055178
(43) Veröffentlichungstag der Anmeldung: 15.05.2002
(73) Patentinhaber: Vacuumschmelze GmbH & Co. KG, 63450 Hanau (DE)
(72) Erfinder: Proksch, Dieter, 63776 Mömbris (DE); Nykrake, Norbert, 65843 Sulzbach (DE); Tempel, Dietmar, 63486 Bruchköbel (DE); Hundt, Harald, 64807 Dieburg (DE)
(74) Vertreter: Schmuckermaier, Bernhard

(56) Entgegenhaltungen:
- EP-A- 0 756 294
- DE-C- 19 813 527
- JP-A- 52 058 042
- US-A- 3 765 591
- US-A- 4 402 448
- US-A- 4 600 137
- US-A- 5 228 614
- PATENT ABSTRACTS OF JAPAN vol. 015, no. 486 (E-1143), 10. Dezember 1991 (1991-12-10) & JP 03 211788 A (TOKYO PRINT KOGYO KK), 17. September 1991 (1991-09-17)

## Beschreibung

Die Erfindung betrifft ein Verfahren zum Kontaktieren eines Wicklungsdrahtes einer Spule mit einem Anschlussstift eines Bauelements, insbesondere eines induktiven Bauelementes, für die Oberflächenmontage gemäß dem Oberbegriff des Anspruchs 1 (siche, z.B., DE-C-198 13 527)

Ein ähnliches Verfahren ist auch aus der US 6,073,832 bekannt.

Der US 3,765,591 ist ein Verfahren zum Anlöten von Drähten an Kontaktstifte zu entnehmen, wobei die mit dem Draht kontaktierten Kontaktstifte durch ein Lötbad bewegt und anschließend mit einer Düse angeblasen werden, um das Lot abzukühlen und überschüssiges Lot zu entfernen.

Die EP 0 756 294 A1 offenbart einen Hochfrequenztransformator, welcher auf einer Basisplatte befestigt wird, indem die Basisplatte in ein Lotbad getaucht wird.

Die US 5,228,614 bezieht sich auf eine Wellenlötanlage, bei welcher mittels eines Gasstromes die Lotausbildung unterhalb einer Leiterplatte beeinflusst wird.

Im Bereich der induktiven Bauelemente für die Oberflächenmontage, der sogenannten SMD-Bauelemente (SMD = Surface Mounted Device, siehe z. B. DE-C-198 13 527), sind Anschlüsse verbreitet, die sich fest in einem in der Regel aus Kunststoff bestehenden Gehäuse befinden. Die rückwärtigen Enden der Anschlussstifte sind dabei nicht im Werkstoff des Gehäuses eingebettet. Die Endabschnitte der Wicklungsdrähte werden um diese rückwärtigen Enden der Anschlussstifte gewickelt und mit einer Weichlotverbindung versehen. Typischerweise sind diese Anschlussstifte außerhalb des Gehäuses schwingenförmig abgebogen (Gull-Wing-Anschluss-Stifte).

Dies hat den Vorteil, dass die aus dem Gehäuse ragenden und für die Oberflächenmontage vorgesehenen entgegengesetzten Enden der Anschlussstifte nicht mit Weichlot vor der eigentlichen Oberflächenmontage in Kontakt treten und somit eine optimale Koplanarität aufweisen.

Andererseits erfordern die rückwärtigen Enden der Anschlussstifte innerhalb des Gehäuses einen beträchtlichen Platz, um optimal mit den Endabschnitten der Wicklungsdrähte verlötet werden zu können. Demnach sind solche induktiven SMD-Bauelemente bezüglich ihres Bauelementvolumens nicht optimiert.

Eine andere Bauweise besteht darin, die Anschlußstifte im Kunststoffgehäuse enden zu lassen. Die Endabschnitte der Wicklungsdrähte werden dann um den hinteren Bereich des aus dem Gehäuse ragenden Anschlußstifts gewickelt und anschließend mit einer Weichlotverbindung versehen. Auch hier sind diese Anschlußstifte typischerweise außerhalb des Gehäuses schwingenförmig abgebogen (Gull-Wing-Anschluß-stifte).

Dieses Verfahren ist zwar bzgl. des Bauelementevolumens optimiert, es hat aber den großen Nachteil, daß das Weichlot den gesamten aus dem Gehäuse ragenden Anschlußstift benetzt und damit die Koplanarität der einzelnen Anschlußstifte negativ beeinträchtigt.

Da der Lotauftrag auf alle Anschlußstifte eines einzelnen Bauelements unregelmäßig erfolgt, ist im Vergleich zur ersten obengenannten Vorgehensweise immer eine wesentlich schlechtere Koplanarität gegeben. Dies versucht man bisher dadurch zu mildern, in dem man nachfolgende Verfahrensschritte , sogenannte "Prägeschritte" ausführt. Bei diesen "Prägeschritten" wird das aufgebrachte Weichlot "plattgedrückt". Dabei kommt es aber immer wieder dazu, daß die Wicklungsdrähte durch die mechanische Belastung an den einzelnen Lötstellen beschädigt werden und es zumindest langfristig zu einer Unterbrechung des Kontaktes zwischen den Wicklungsdrähten und dem Anschlußstift kommt, so daß es insgesamt zum Totalausfall des Bauelements kommen kann.

Aufgabe der vorliegenden Erfindung ist es daher, ein wesentlich verbessertes Verfahren der eingangs genannten Art bereitzustellen, bei dem eine hervorragende Koplanarität der einzelnen aus dem Bauelementgehäuse ragenden Anschlußstifte gewährleistet ist und die oben geschilderten "Prägeschritte" entfallen können.

Erfindungsgemäß wird diese Aufgabe gelöst durch ein Verfahren zum Kontaktieren eines Spulenwicklungsdrahtes mit einem Anschlußstift eines Gehäuses für die Oberflächenmontage, wobei ein Endabschnitt des Wicklungsdrahtes um den Anschlußstift umwickelt ist, mit folgenden Schritten:
- Der mit dem Endabschnitt des Wicklungsdrahtes umwickelte Bereich des Anschlußstifts wird mit einem Weichlot versehen und
- das Weichlot wird von dem die Auflotfläche für die Oberflächenmontage bildenden Teilbereich des umwickelten Bereichs abgeblasen.

Durch diese Vorgehensweise wird die unregelmäßige Lotbedeckung der Anschlußstifte auf ein Minimum abgesenkt.

In einer bevorzugten Ausführung des vorliegenden Verfahrens wird der mit den Endabschnitt des Wicklungsdrahtes umwickelte Bereich des Anschlußstifts in ein Bad mit Weichlot eingetaucht. Dabei wird typischerweise ein Flußmittel verwendet, um eine zuverlässige Lötung zu gewährleisten.

In einer ersten Variante der vorliegenden Erfindung wird das Weichlot dann von dem die Auflotfläche für die Oberflächenmontage bildenden Teilbereich des umwickelten Bereichs mittels eines inerten Prozeßgas abgeblasen.

In einer zweiten Variante der vorliegenden Erfindung wird anstatt eines inerten Prozeßgases ein reduzierendes Prozeßgas verwendet. Es sind jedoch auch Mischungen aus verschiedenen inerten- und/oder reduzierenden Prozeßgasen möglich.

Durch die Verwendung solcher zumindest inerten oder besser reduzierenden Prozeßgase wird die Bildung von Oxidhäutchen, d. h. also die Bildung von sogenannter "Lotkrätze" vermieden.

In einer besonders bevorzugten Ausführungsform der vorliegenden Erfindung wird das Prozeßgas oder die Prozeßgasmischungen vorgewärmt, so daß thermomechanische Beschädigungen an den Lötstellen nahezu ausgeschlossen werden.

Zur Erleichterung des Lötens werden vorzugsweise Wicklungsdrähte aus Kupfer-Lackdraht mit vorverzinnten Endabschnitten verwendet. Dadurch kann der Lötprozeß bei niedrigeren Temperaturen, d. h. bei Temperaturen um die 250°C stattfinden, was die Verwendung von Kunststoffen für das Gehäuse bzw. für im Gehäuse angeordnete Spulenkörper erlaubt, die eine geringere Temperaturbeständigkeit aufweisen. Insbesondere können damit Polykarbonate und Polyamide eingesetzt werden.

Durch den Einsatz des erfindungsgemäßen Verfahrens kann des weitern das Ausbilden von sogenannten Lötbrücken zwischen benachbarten Anschlußstiften vermieden werden. Lötbrücken beeinträchtigen nicht notwendigerweise die Koplanarität, sie sind aber selbstverständlich unter allen Umständen zu vermeiden.

Die Erfindung ist im folgenden anhand der Zeichnung beispielsweise beschrieben. Dabei zeigen:
- Figur 1: in perspektivischer Ansicht den ersten Teilschritt des erfindungsgemäßen Verfahrens;
- Figur 2: in perspektivischer Ansicht den zweiten Teilschritt des erfindungsgemäßen Verfahrens;
- Figur 3: eine vergrößerte Ansicht eines Ausschnittes aus der Figur 2 vor der Ausführung des zweiten Teilschritts des erfindungsgemäßen Verfahrens und
- Figur 4: einen vergrößerten Ausschnitt aus der Figur 2 nach Ausführung des zweiten Teilschritts des erfindungsgemäßen Verfahrens.

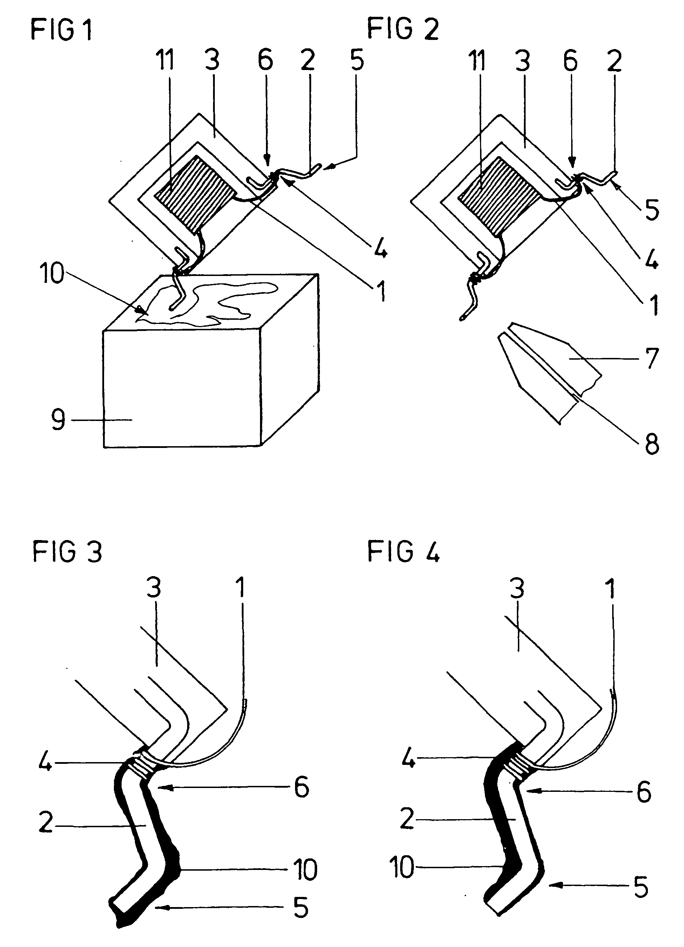

Wie aus der Figur 1 zu ersehen ist wird zur Umsetzung der vorliegenden Erfindung ein induktives SMD-Bauelement bereitgestellt, das ein Gehäuse 3 aufweist, in dessen Innerem eine Spule 11 eingebracht ist. Die Spule 11 besteht aus einem Wicklungsdraht 1, der in der Regel um einen weichmagnetischen Kern (nicht gezeigt) gewickelt ist. Die beiden Endabschnitte 4 des Wicklungsdrahtes sind aus dem Gehäuseinneren herausgeführt und um die hinteren Bereiche der aus dem Gehäuse 3 ragenden Anschlußstifte 2 gewickelt. Die Anschlußstifte 2 weisen in dem gezeigten Ausführungsbeispiel eine schwingenförmig abgebogene Gestalt auf. Solche Anschlußstifte werden bekanntlich Gull-Wing-Pins genannt.

Der mit dem Endabschnitt 4 des Wicklungsdrahtes 1 umwickelte Bereich des Anschlußstiftes 2 wird, wie in der Figur 1 dargestellt, mit einem Weichlot 10 versehen. Dazu wird der Anschlußstift 2 in ein mit geschmolzenem Weichlot gefülltes Lötbad 9 eingebracht, so daß das Weichlot 10 den Wicklungsdraht 1 fest mit den Anschlußstiften 2 verbindet. Zuvor wurden die Anschlußstifte 2 in ein Flußmittel (nicht gezeigt) getaucht, um eine optimale Lotvebindung zu garantieren.

Danach wird, wie in der Figur 2 dargestellt, das Weichlot 10 von dem die Auflotflächen 5 für die Oberflächenmontage bildenden Teilbereichen 6 der umschlungenen Bereiche der Anschlußstifte 2 abgeblasen. Zum Abblasen wird ein vorgewärmtes Prozeßgas 8 durch eine Düse 7 auf die Teilbereiche 6 gerichtet.Bei dem Prozeßgas handelt es sich im vorliegenden Fall um Argon.

Aus der Figur 3 sieht man deutlich, daß das Weichlot 10 vor dem Abblasen den gesamten außerhalb des Gehäuse 3 liegenden Bereich des Anschlußstifts 2 benetzt. Dadurch wird eine sehr schlechte Koplanarität der einzelnen Anschlußstifte erzielt.

Nach Abblasen des Weichlots 10 von den die Auflotfläche 5 für die Oberflächenmontage bildenden Teilbereichen 6 des umschlungenen Bereichs des Anschlußstiftes 2 befindet sich das überschüssige Weichlot nur noch auf den der Auflotfläche 5 entgegengesetzten Oberfläche des Anschlußstiftes 2, was in der Figur 4 dargestellt ist.

Bei dem gezeigten induktiven SMD-Bauelement wurde für den Wicklungsdraht ein Kupfer-Lackdraht verwendet und für das Gehäuse ein Polyamid. Bei dem mit dem erfindungsgemäßen Verfahren durchgeführten Verlötungen reduzierten sich unregelmäßige Lotbedeckungen von 0,050 bis 0,3 mm auf Werte kleiner 0,020 mm.

Das erfindungsgemäße Verfahren läßt sich mit verschiedensten Löttechniken durchführen und bietet bei allen Arten von induktiven Bauelementen, insbesondere SMD-Bauelementen, hervorragende Ergebnisse. Es ist dabei gleich, ob das Verfahren bei der Herstellung von induktiven Bauelementen wie z. B. Übertragern oder Drosseln verwendet wird oder bei der Herstellung von elektromechanischen Bauelementen verwendet wird wie z. B. Relais.

### Bezugszeichenliste

- 1: Wicklungsdraht
- 2: Anschlußstift
- 3: Gehäuse
- 4: Endabschnitt
- 5: Auflotfläche
- 6: Teilbereich
- 7: Düse
- 8: Prozeßgas
- 9: Lötbad
- 10: Weichlot
- 11: Spule

## Patentansprüche

1. Verfahren zum Kontaktieren eines Wicklungsdrahtes (1) einer Spule (11) mit einem Anschlussstift (2) eines Bauelementes für die Oberflächenmontage, wobei ein Endabschnitt (4) des Wicklungsdrahtes (1) um den Anschlussstift umwickelt ist, wobei der mit dem Endabschnitt (4) des Wicklungsdrahtes (1) umwickelte Bereich des Anschlussstifts (2) mit einem Weichlot (10) versehen wird, wobei
ein schwingenförmig abgebogener Anschlussstift (2) verwendet wird **dadurch gekennzeichnet, dass** das Weichlot (10) von dem die Auflotfläche (5) für die Oberflächenmontage bildenden Teilbereich (6) des umwickelten Bereichs abgeblasen wird.

2. Verfahren nach Anspruch 1,
wobei der mit dem Endabschnitt (4) des Wicklungsdrahtes (1) umwickelte Bereich des Anschlussstifts (2) in ein Bad (9) mit Weichlot (10) eingetaucht wird.

3. Verfahren nach einem der Anschlüsse 1 bis 2,
wobei das Weichlot (10) von dem die Auflotfläche (5) für die Oberflächenmontage bildenden Teilbereich (6) des umwickelten Bereichs mittels einem inerten Prozessgas (8) abgeblasen wird.

4. Verfahren nach einem der Ansprüche 1 bis 2,
wobei das Weichlot (10) von dem die Auflotfläche (5) für die Oberflächenmontage bildenden Teilbereich (6) des umwickelten Bereichs mittels einem reduzierenden Prozessgas (8) abgeblasen wird.

5. Verfahren nach Anspruch 3 oder 4,
wobei Mischungen aus verschiedenen inerten und/oder reduzierenden Prozessgasen (8) verwendet werden.

6. Verfahren nach Anspruch 3 oder 4,
wobei das Prozessgas vorgewärmt wird.

7. Verfahren nach einem der Ansprüche 1 bis 6,
wobei ein vorverzinnter Endabschnitt (4) des Wicklungsdrahtes (1) um den Anschlussstift (2) umwickelt ist.

8. Verfahren nach einem der Ansprüche 1 bis 7,
wobei der mit dem Endabschnitt (4) des Wicklungsdrahtes (1) umwickelte Bereich des Anschlussstifts (2) vor dem Versehen mit Weichlot in ein Flussmittel getaucht wird.

9. Verfahren nach einem der Ansprüche 1 bis 8,
wobei als Wicklungsdraht (1) ein Kupfer-Lackdraht vorgesehen ist.

10. Verfahren nach einem der Ansprüche 1 bis 9,
wobei die Spule (11) um einen weichmagnetischen kern gewickelt ist.

11. Verwendung eines Verfahrens nach einem der Ansprüche 1 bis 10 zum gleichzeitigen Kontaktieren mehrerer Anschlussstifte eines Bauelementes für die Oberflächenmontage.

12. Verwendung nach Anspruch 11,
**dadurch gekennzeichnet, dass** auftretende Lötbrücken zwischen benachbarten Anschlussstiften abgeblasen werden.

## Claims

1. Method of contacting a winding wire (1) of a coil (11) with a connecting pin (2) of a component for surface mounting, in which an end portion (4) of the winding wire (1) is wound around the connecting pin, the region of the connecting pin (2) around which the end portion (4) of the winding wire (1) is wound is provided with a soft solder (10) and a connecting pin (2) bent into a wing shape is used, **characterised in that** the soft solder (10) is blown off the part (6) of the wound region forming the soldering surface (5) for surface mounting.

2. Method according to claim 1, in which the region of the connecting pin (2) around which the end portion (4) of the winding wire (1) is wound is immersed in a bath (9) of soft solder (10).

3. Method according to one of claims 1 to 2, in which the soft solder (10) is blown off the part (6) of the wound region forming the soldering surface (5) for surface mounting by means of an inert process gas (8).

4. Method according to one of claims 1 to 2, in which the soft solder (10) is blown off the part (6) of the wound region forming the soldering surface (5) for surface mounting by means of a reducing process gas (8).

5. Method according to claim 3 or claim 4, in which mixtures of different inert and/or reducing process gases (8) are used.

6. Method according to claim 3 or claim 4, in which the process gas is pre-heated.

7. Method according to one of claims 1 to 6, in which a pre-tinned end portion (4) of the winding wire (1) is wound around the connecting pin (2).

8. Method according to one of claims 1 to 7, in which the region of the connecting pin (2) around which the end portion (4) of the winding wire (1) is wound is immersed in a flux before being provided with soft solder.

9. Method according to one of claims 1 to 8, in which an enamelled copper wire is provided as the winding wire (1).

10. Method according to one of claims 1 to 9, in which the coil (11) is wound around a soft-magnetic core.

11. Use of a method according to one of claims 1 to 10 for the simultaneous contacting of a plurality of connecting pins of a component for surface mounting.

12. Use according to claim 11, **characterised in that** any solder bridges occurring between adjacent connecting pins are blown off.

## Revendications

1. Procédé pour mettre en contact un fil de bobinage (1) d'une bobine (11) et broche de raccordement (2) d'un composant pour un montage en surface, d'après lequel
une section finale (4) du fil de bobinage (1) est enroulée autour de la broche de raccordement,
la broche de raccordement (2), à savoir la zone entourée par la section finale (4) du fil de bobinage (1), est munie d'un brasage tendre (10),
la broche de raccordement (2) utilisée est recourbée en forme d'aile,
**caractérisé en ce que**
le brasage tendre (10) est soufflé de la zone entourée, à savoir de la zone partielle qui forme la surface de brasage (5) pour le montage en surface.

2. Procédé selon la revendication 1, d'après lequel
la broche de raccordement (2), à savoir sa zone entourée par la section finale (4) du fil de bobinage (1), est plongée dans un bain (9) de brasage tendre (10).

3. Procédé selon l'une des revendications 1 et 2, d'après lequel
à l'aide d'un gaz de transformation (8) inerte, le brasage tendre (10) est soufflé de la zone entourée, à savoir de la zone partielle (6) qui forme la surface de brasage (5) pour le montage en surface.

4. Procédé selon l'une des revendications 1 et 2, d'après lequel
à l'aide d'un gaz de transformation (8) réducteur, le brasage tendre (10) est soufflé de la zone entourée, à savoir de la zone partielle (6) qui forme la surface de brasage (5) pour le montage en surface.

5. Procédé selon la revendication 3 ou 4, d'après lequel
on utilise des mélanges de différents gaz de transformation (8) inertes et/ou réducteurs.

6. Procédé selon la revendication 3 ou 4, d'après lequel
le gaz de transformation est préchauffé.

7. Procédé selon l'une des revendications 1 à 6, d'après lequel
une section finale (4) pré-étamée du fil de bobinage (1) est enroulée autour de la broche de raccordement (2).

8. Procédé selon l'une des revendications 1 à 7, d'après lequel
la broche de raccordement (2), à savoir la zone entourée par la section finale (4) du fil de bobinage (1), est plongée dans un fondant avant qu'elle soit munie de brasage tendre.

9. Procédé selon l'une des revendications 1 à 8, d'après lequel
un fil en cuivre verni sert de fil de bobinage (1).

10. Procédé selon l'une des revendications 1 à 9, d'après lequel
la bobine (11) est enroulée autour d'un noyau magnétique doux.

11. Utilisation d'un procédé selon l'une des revendications 1 à 10 pour mettre en contact en même temps plusieurs broches de raccordement d'un composant à monter en surface.

12. Utilisation selon la revendication 11,
**caractérisée en ce que**
des pontages qui apparaissent entre des broches de raccordement voisines sont soufflés.
